(19) Europäisches Patentamt
European Patent Office
Office européen des brevets

(11) **EP 2 582 972 B1**

(12) **EUROPÄISCHE PATENTSCHRIFT**

(45) Veröffentlichungstag und Bekanntmachung des Hinweises auf die Patenterteilung:
**26.08.2020 Patentblatt 2020/35**

(21) Anmeldenummer: **11723002.9**

(22) Anmeldetag: **20.05.2011**

(51) Int Cl.:
**F03D 7/04** *(2006.01)*

(86) Internationale Anmeldenummer:
**PCT/EP2011/002533**

(87) Internationale Veröffentlichungsnummer:
**WO 2011/157342 (22.12.2011 Gazette 2011/51)**

(54) **VERFAHREN UND VORRICHTUNG ZUR VERHINDERUNG EINER QUERSCHWINGUNG EINER WINDENERGIEANLAGE**

METHOD AND DEVICE FOR PREVENTING A LATERAL OSCILLATION OF A WIND POWER INSTALLATION

PROCÉDÉ ET DISPOSITIF EMPÊCHANT UNE OSCILLATION TRANSVERSALE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2010 DE 102010023887**

(43) Veröffentlichungstag der Anmeldung:
**24.04.2013 Patentblatt 2013/17**

(73) Patentinhaber: **Weidmüller Monitoring Systems GmbH**
**01099 Dresden (DE)**

(72) Erfinder:
• **HESS, Felix**
**71642 Ludwigsburg (DE)**
• **BUCHTALA, Boris**
**75417 Mühlacker (DE)**

(74) Vertreter: **Kleine, Hubertus**
**Loesenbeck - Specht - Dantz**
**Patent- und Rechtsanwälte**
**Am Zwinger 2**
**33602 Bielefeld (DE)**

(56) Entgegenhaltungen:
**WO-A1-02/075153**

• **TORBJÖRN THIRINGER RING ET AL: "Periodic Pulsations from a Three-Bladed Wind Turbine", IEEE TRANSACTIONS ON ENERGY CONVERSION, IEEE SERVICE CENTER, PISCATAWAY, NJ, US, Bd. 16, Nr. 2, 1. Juni 2001 (2001-06-01), XP011015631, ISSN: 0885-8969**
• **CASELITZ P ET AL: "REDUCTION OF FATIGUE LOADS ON WIND ENERGY CONVERTERS BY ADVANCED CONTROL METHODS", EUROPEAN WIND ENERGY CONFERENCE, XX, XX, 1. Oktober 1997 (1997-10-01), Seiten 555-558, XP008031751,**

**Beschreibung**

Die vorliegende Erfindung bezieht sich auf ein Verfahren und eine Vorrichtung zur Verhinderung einer Querschwingung eines Turms einer Windenergieanlage.

Bei Windenergieanlagen mit horizontaler Achse und drei Rotorblättern wird durch synchrone Verstellung der Blattwinkel die Drehzahl oberhalb der Nennwindgeschwindigkeit so geregelt, dass durch die Änderung des Anstellwinkels der aerodynamische Auftrieb und somit das Antriebsmoment in solcher Weise verändert wird, dass die Anlage im Bereich der Nenndrehzahl gehalten werden kann. Bei Windgeschwindigkeiten oberhalb der Abschaltegeschwindigkeit wird dieser Blattverstellmechanismus zudem als Bremse benutzt, indem die Blätter mit der Nase in den Wind gestellt werden, so dass der Rotor keine nennenswerten Antriebsmomente mehr liefert.

Bei dieser kollektiven Blattverstellung ergeben sich aufgrund asymmetrischer aerodynamischer Lasten Nick- und Gier-Momente auf den Rotor. Die asymmetrischen Lasten entstehen z.B. durch Windscherungen in vertikaler und horizontaler Richtung, aufgrund von Grenzschichten, durch die nicht exakte Ausrichtung der Windkraftanlage im Wind, Böen und Turbulenzen oder durch Aufstauung der Strömung am Turm. Um diese asymmetrischen aerodynamischen Lasten zu reduzieren, kann der Anstellwinkel der Blätter individuell verstellt werden (engl.: Individual Pitch Control, IPC).

Die WO 02/075153 A1 beschreibt ein Verfahren zur Steuerung einer Windenergieanlage mit einer Steuerungsvorrichtung zur Betriebsführung der Windenergieanlage, bei welchem die Beschleunigung des Turmes erfasst wird. Dabei sind Mittel vorgesehen, mit denen Schwingungen des Turms der Windenergieanlage in wenigstens zwei verschiedenen Richtungen erfasst werden. Die ermittelten Werte werden in der Steuerungseinrichtung verarbeitet, und zwar derart, dass die Betriebsführung der Windenergieanlage verändert wird, wenn die Schwingung und/oder die absolute Auslenkung des Turms einen vorgebbaren ersten Grenzwert überschreitet.

Die WO 2008/041066 A1 befasst sich mit einer Steuerung einer Rotorlast einer Windturbine. Dabei kann die Fore-Aft-Schwingung, also die Schwingung in

Windrichtung durch kollektives Pitchen gedämpft werden, wobei versucht wird, dabei keine symmetrische Blattschwingung zu erzeugen.

Das DE 297 15 249 U1 beschreibt eine Windenergieanlage mit einem Rotor und wenigstens einem Rotorblatt, das um seine Längsachse drehbar am Rotor gelagert ist. Zur Einstellung eines Rotorblattwinkels ist eine Verstelleinrichtung vorgesehen, die zur Reduzierung eines auf den Rotor ausgeübten Gier- und/oder Nickmoments eingerichtet ist.

Es ist die Aufgabe der vorliegenden Erfindung, ein verbessertes Verfahren und eine verbesserte Vorrichtung zur Verhinderung einer Querschwingung eines Turms einer Windenergieanlage zu schaffen.

Diese Aufgabe wird durch ein Verfahren und eine Vorrichtung zur Verhinderung einer Querschwingung eines Turms einer Windenergieanlage gemäß den unabhängigen Patentansprüchen gelöst.

Der vorliegenden Erfindung liegt die Erkenntnis zu Grunde, dass die Querschwingungen des Turmes einer Windkraftanlage gedämpft werden können, indem dazu individuelle Anstellwinkel der Rotorblätter, sogenannte Pitchwinkel, verwendet werden. Ziel eines erfindungsgemäßen IPC-Reglers ist es daher, durch ein individuelles Einstellen der Anstellwinkel der Blätter, nicht nur die Nick- und Gier-Momente zu reduzieren, sondern zusätzlich auch die seitlichen Turmschwingungen zu dämpfen.

Eine weitere Erkenntnis der vorliegenden Erfindung besteht darin, dass bekannte IPC-Regelungen Querschwingungen des Turms anregen können. Erfindungsgemäß kann dies verhindert werden, indem der IPC-Regler so ausgelegt wird, dass er die Querschwingungen nicht anregt.

Der erfindungsgemäße Ansatz kann somit vorteilhaft im Zusammenhang mit einem bekannten IPC-Regler eingesetzt werden, mit dem auf die Windenergieanlage wirkende asymmetrische aerodynamische Lasten reduziert werden, indem die Anstellwinkel der Blätter individuell verstellt werden. Dabei werden typischerweise Sensoren in oder an den Rotorblättern angebracht, um die Schlagbiegemomente an den Rotorblättern zu messen. Diese dienen dann als Regelgrößen für die individuelle Blattverstellung. Auch können die Nick- und Gier-Momente durch Messung der Gondelbeschleunigung über Gyrometer oder durch Sensoren ermittelt werden, die über Abstandsmessungen die durch die Belastungen auftretenden Verformungen von Anlagenteilen messen und dadurch die Belastungen bestimmen.

Vorteilhafterweise ist erfindungsgemäß eine Reduktion der Nick- und Gier-Momente durch IPC möglich, ohne dass die seitliche Turmschwingung angeregt wird, und es ist eine Dämpfung der lateralen Schwingung durch IPC möglich, ohne dass das Nick-Moment unzulässig groß wird.

Die vorliegende Erfindung schafft ein Verfahren zur Verhinderung einer Querschwingung eines Turms einer Windenergieanlage mit mindestens zwei Rotorblättern mit verstellbaren Anstellwinkeln, das folgenden Schritt umfasst: Bestimmen einer oder mehrerer Stellgrößen zum Einstellen der Anstellwinkel, basierend auf einer Information über ein Nick-Moment und ein Gier-Moment des Rotors, wobei ein entgegenwirkendes Moment erzeugt wird, das dem Nick-Moment und dem Gier-Moment entgegenwirkt ohne eine Querbeschleunigung des Turmkopfes anzuregen, wenn die Anstellwinkel basierend auf der Stellgröße eingestellt werden.

Das Verfahren kann beispielsweise bei einer Windenergieanlage eingesetzt werden, die einen Turm aufweist, an dessen oberen Ende ein Rotor angeordnet ist. Der Rotor ist um eine zur Längsachse des Turms im Wesentlichen senkrecht stehende Rotorachse drehbar gelagert. Die Querschwingung des Turms kann in einer Richtung erfolgen, die im Wesentlichen senkrecht zur Längsachse des Turms und senkrecht zur Rotorachse ausgerichtet ist. Der Rotor kann drei Rotorblätter aufweisen. Jedes der Rotorblätter kann einzeln und unabhängig von den anderen um seine Längsachse drehbar an der Nabe gelagert sein. Eine Drehung um die Längsachse eines Rotorblatts wird jeweils über den Anstellwinkel definiert. Die Stellgröße ist geeignet, um für jedes der Rotorblätter einen individuellen Anstellwinkel zu definieren. Basierend auf der Stellgröße können die Anstellwinkel gemäß einer vorbestimmten Bestimmungsvorschrift bestimmt werden. Alternativ kann die Stellgröße die Anstellwinkel bereits definieren. Die Stellgröße kann ausgebildet sein, um die Anstellwinkel abhängig von einer Winkelstellung des Rotors, über den eine Position der Rotorblätter definiert wird, zu bestimmen. Die Stellgröße kann mittels eines IPC-Reglers bestimmt werden. Der Regler kann gemäß einem geeigneten Reglerentwurfsverfahren bestimmt werden, bei dem das Nick-Moment, das Gier-Moment und die Querbeschleunigung einbezogen sind. Dazu kann berücksichtigt werden, dass eine Querbeschleunigung des Turms abhängig von einem Anteil der Stellgröße ist, über den das Nick-Moment beeinflusst werden kann. Auch kann die Aerodynamik der Windkraftanlage, die beispielsweise über eine Ableitung eines Rotorblattdrehmoments nach dem Anstellwinkel des Rotorblatts angenähert werden kann, in das Reglerentwurfsverfahren einfließen. Das Nick-Moment und das Gier-Moment können auf aktuellen Messwerten basieren oder auf einem zeitlichen Verlauf erfasster Messwerte. Dabei können das Nick-Moment und das Gier-Moment direkt gemessen oder aus gemessenen Werten bestimmt werden. Zur Messung können jeweils geeignete Sensoren eingesetzt werden. Das Nick-Moment definiert ein auf den Rotor wirkendes Nick-Moment um eine im Wesentlichen senkrecht zur Längsachse des Turms und senkrecht zur Rotorachse stehende Querachse. Das Gier-Moment definiert ein im Wesentlichen um die Längsachse des Turms auf den Rotor wirkendes Moment. Die Querbeschleunigung definiert eine Beschleunigung des Rotors oder des oberen Ende des Turms in Richtung der Querschwingung. Werden die Rotorblätter im Betrieb von Wind angeströmt, so entwickeln sie jeweils eine Schubkraft. Die Schubkraft wirkt jeweils auf den Rotor und den Turm. Über die Anstellwinkel können die Schubkräfte beeinflusst werden. Erfindungsgemäß kann die Stellgröße aus aktuellen Werten oder zeitlichen Verläufen des Nick-Moments und des Gier-Moments so bestimmt werden, dass das Nick-Moment und das Gier-Moment reduziert werden. Ferner kann die Stellgröße so bestimmt werden, dass die Querschwingung entweder nicht angeregt oder aber eine bestehende Querschwingung gedämpft wird.

Gemäß einer Ausführungsform kann beim Bestimmen der Stellgröße die erste Eigenfrequenz des Turms in Bezug auf die Querschwingung in einem zeitlichen Verlauf der Stellgröße unterdrückt werden. Dazu können die erste Eigenfrequenz anregende Impulse insbesondere in einem Anteil der Stellgröße, über den das Nick-Moment beeinflusst werden kann, unterdrückt werden. Die entsprechenden Impulse können unter Einsatz eines oder mehrerer Filter unterdrückt werden. Beispielsweise kann ein Tiefpassfilter oder ein Bandpassfilter eingesetzt werden. Der Tiefpassfilter kann im Bereich der ersten Eigenfrequenz und darüber liegende Frequenzbereiche herausfiltern und somit unterdrücken. Der Bandpassfilter kann im Bereich der ersten Eigenfrequenz liegende Frequenzbereiche herausfiltern und somit unterdrücken. Zusätzlich oder alternativ zu einem Filter kann auch eine Limitierung der Änderungsgeschwindigkeit des zeitlichen Verlaufs der Stellgröße vorgenommen werden. Auf diese Weise kann eine Anregung der Querschwingung unterdrückt werden.

Auch kann die Stellgröße ferner basierend auf einer Information über die Querbeschleunigung des Turmkopfes so bestimmt werden, dass die resultierende Querkraft der Querbeschleunigung entgegenwirkt, wenn die Anstellwinkel basierend auf der Stellgröße eingestellt werden. Auf diese Weise kann die Querschwingung aktiv gedämpft werden. Die Information über die Querbeschleunigung kann auf aktuellen Messwerten basieren oder auf einem zeitlichen Verlauf erfasster Messwerte. Dabei kann die Querbeschleunigung direkt gemessen oder aus gemessenen Werten bestimmt werden. Zur Messung können jeweils geeignete Sensoren eingesetzt werden. Erfindungsgemäß kann die Stellgröße aus aktuellen Werten oder zeitlichen Verläufen des Nick-Moments, des Gier-Moments und der Querbeschleunigung so bestimmt werden, dass das Nick-Moment, und das Gier-Moment reduziert werden und die Querschwingung entweder nicht angeregt oder gedämpft wird.

Dabei werden die Querbeschleunigung und das Nick-Moment zusammen betrachtet. Dadurch kann vermieden werden, dass das Nick-Moment auf Kosten der Querbeschleunigung reduziert wird, oder umgekehrt.

Gemäß einer Ausführungsform kann die Stellgröße ferner ausgebildet sein, um ein Generatormoment eines Generators der Windkraftanlage einzustellen. Dabei kann ein der Querbeschleunigung entgegenwirkendes Moment erzeugt werden, wenn das Generatormoment basierend auf der Stellgröße eingestellt wird. Der Generator kann mit dem Rotor gekoppelt und an dem oberen Ende des Turms angeordnet sein. Der Generator kann über eine Rotorwelle und/oder ein Getriebe mit dem Rotor verbunden sein. Eine Drehbewegung des Rotors kann mittels des Generators in elektrische Energie gewandelt werden. Der Einfluss des Generatormoments kann beispielsweise eingesetzt werden, wenn der Einfluss der Anstellwinkel nicht ausreichend ist, um die erforderliche Dämpfungswirkung zu erzielen.

Die Stellgröße kann basierend auf einer Information über ein mit einer ersten Gewichtung gewichtetes Nick-Moments, ein mit einer zweiten Gewichtung gewichtetes Gier-Moment und eine mit einer dritten Gewichtung gewichtete Querbeschleunigung des Turmkopfes bestimmt werden. Auf diese Weise können die Größen, deren Dämpfung vorrangig ist, herausgestellt werden.

Dazu kann in einem Schritt des Einstellens ein Verhältnis der Gewichtungen zueinander eingestellt werden. Dadurch kann ein Einfluss der Stellgröße auf das Nick-Moment und das Gier-Moment im Verhältnis zu einem Einfluss der Stellgröße auf die Querbeschleunigung festgelegt werden, wenn die Anstellwinkel basierend auf der Stellgröße eingestellt werden. Somit kann eingestellt werden, ob vorrangig die Querschwingung gedämpft oder vorrangig die Momente reduziert werden. Wird das Verhältnis der Gewichtungen so verschoben, dass das Nick-Moment stärker gewichtet wird und die Querbeschleunigung geringer gewichtet wird, so wird eine Unterdrückung des Nick-Moments erhöht, eine Dämpfung der Querschwingung jedoch verringert. Wird das Verhältnis der Gewichtungen dagegen so verschoben, dass die Querbeschleunigung stärker gewichtet wird und das Nick-Moment geringer gewichtet wird, so wird die Dämpfung der Querschwingung erhöht, die Unterdrückung des Nick-Moments jedoch verringert. Der Einfluss der Stellgröße auf die Querbeschleunigung ist gekoppelt mit dem Einfluss der Stellgröße auf das Nick-Moment. Typischerweise erhalten das Nick-Moment und das Gier-Moment die gleiche Gewichtung. Das Nick-Moment und das Gier-Moment können jedoch auch unterschiedlich gewichtet werden.

Gemäß einer Ausführungsform erfolgen die Gewichtungen jeweils im Frequenzbereich des Nick-Moments, des Gier-Moments und der Querbeschleunigung. Somit können die Gewichtungen frequenzabhängig sein. Beispielsweise können niedrige Frequenzen stärker als höhere Frequenzen gewichtet werden. Auch kann die Querbeschleunigung im Bereich der ersten Eigenfrequenz des Turms stärker gewichtet werden, als in den angrenzenden Frequenzbereichen.

Die vorliegende Erfindung schafft ferner ein Verfahren zur Verhinderung einer Querschwingung eines Turms einer Windenergieanlage mit mindestens zwei Rotorblättern mit verstellbaren Anstellwinkeln, das die folgenden Schritte umfasst: Bestimmen einer auf den Turm wirkenden Querkraft basierend auf Abweichungen individueller Anstellwinkel der Rotorblätter gegenüber einem kollektiven mittleren Anstellwinkel aller Rotorblätter; und Bestimmen eines Stellwertes zum Einstellen eines Generatormoments eines Generators der Windkraftanlage basierend auf der Querkraft und einer Querbeschleunigung des Turms, wobei ein der Querbeschleunigung entgegenwirkendes Moment erzeugt wird, wenn das Generatormoment basierend auf dem Stellwert eingestellt wird.

Die Abweichungen der individuellen Anstellwinkel können von einem IPC-Regler bestimmt werden. Der kollektive Anstellwinkel ist für alle Rotorblätter gleich und kann so gewählt sein, dass die Windenergieanlage im Nenndrehzahlbereich gefahren wird. Die tatsächlichen Anstellwinkel ergeben sich aus dem kollektiven Anstellwinkel und den Abweichungen. Die Abweichungen können so gewählt sein, dass sie aufgrund asymmetrischer aerodynamischer Lasten hervorgerufene Nick-Momente und Gier-Momente reduzieren. Dieser Ansatz ermöglicht es, Turmschwingungen in Querrichtung unabhängig von der eingesetzten Regelung zur Unterdrückung von Nick- und Giermomenten mittels individueller Pitchwinkel zu dämpfen.

Die vorliegende Erfindung schafft ferner eine Vorrichtung zur Verhinderung einer Querschwingung eines Turms einer Windenergieanlage mit mindestens zwei Rotorblättern mit verstellbaren Anstellwinkeln, mit folgenden Merkmalen: einer Einrichtung zum Bestimmen einer Stellgröße zum Einstellen der Anstellwinkel, basierend auf einer Information über ein Nick-Moment und ein Gier-Moment des Rotors, wobei ein entgegenwirkendes Moment erzeugt wird, das dem Nick-Moment und dem Gier-Moment entgegenwirkt ohne eine Querschwingung des Turms anzuregen, wenn die Anstellwinkel basierend auf der Stellgröße eingestellt werden; und/oder einer Einrichtung zum Bestimmen einer auf den Turm wirkenden Querkraft basierend auf Abweichungen individueller Anstellwinkel der Rotorblätter gegenüber einem kollektiven Anstellwinkel aller Rotorblätter und zum Bestimmen eines Stellwertes zum Einstellen eines Generatormoments eines Generators der Windkraftanlage basierend auf der Querkraft und einer Querbeschleunigung des Turms, wobei ein der Querbeschleunigung entgegenwirkendes Moment erzeugt wird, wenn das Generatormoment basierend auf dem Stellwert eingestellt wird.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem, einem Computer entsprechenden Gerät ausgeführt wird.

Die Erfindung wird nachstehend anhand der beigefügten Zeichnungen beispielhaft näher erläutert. Es zeigen:

Fig. 1    eine schematisch Darstellung einer Windenergieanlage, gemäß einem Ausführungsbeispiel der Erfindung;

Fig. 2    eine schematisch Darstellung eines Rotors, gemäß einem Ausführungsbeispiel der Erfindung; und

Fig. 3 ein Blockschaltbild eines Reglers, gemäß einem Ausführungsbeispiel der Erfindung.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

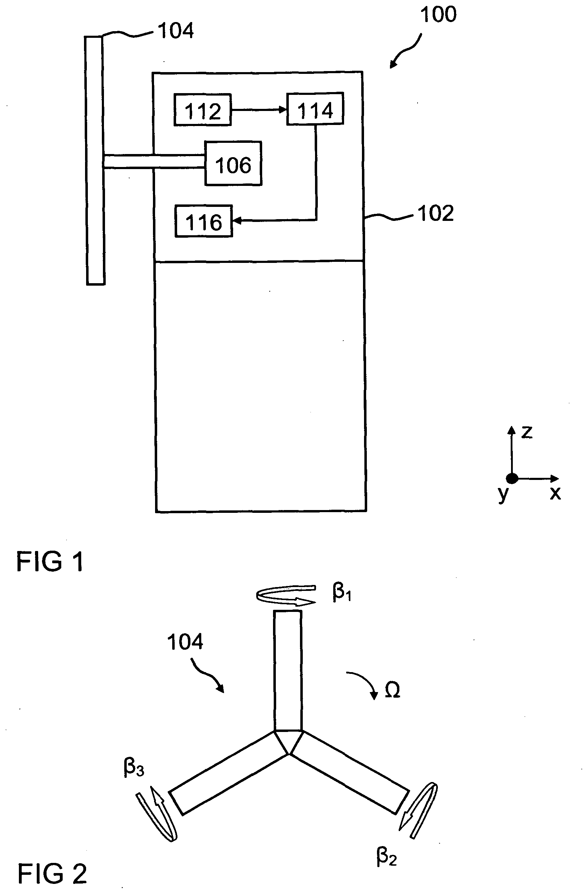

Fig. 1 zeigt eine schematische Darstellung einer Windenergieanlage, gemäß einem Ausführungsbeispiel der vorliegenden Erfindung. Die Windkraftanlage weist einen Turm 100 auf, der in einem Endbereich einen Turmkopf 102 aufweist. Der Turmkopf 100 kann als Gondel ausgebildet sein, und drehbar um eine Längsachse des Turms 100 gelagert sein. Die Längsachse kann in vertikaler Richtung, in Richtung einer z-Achse, verlaufen. An dem Turmkopf 102 ist ein Rotor 104 der Windenergieanlage angeordnet. Der Rotor 104 weist gemäß diesem Ausführungsbeispiel drei Rotorblätter auf. Der Rotor 104 ist drehbar um eine Rotorachse gelagert. Die Rotorachse kann in horizontaler Richtung, in Richtung einer x-Achse, verlaufen. Die Rotorachse kann senkrecht oder im Wesentlichen senkrecht zur Längsachse des Turms ausgerichtet sein. Der Rotor 104 ist, beispielsweise über eine Rotorwelle und/oder ein Getriebe, mit einem Generator 106 gekoppelt. Eine Drehbewegung des Rotors 104 kann von dem Generator 106 in elektrische Energie umgewandelt werden. Der Generator 106 ist in dem Turmkopf 102 angeordnet.

Durch einen auf den Rotor 104 wirkenden Wind, wird der Rotor 104 mit Kräften und Momenten beaufschlagt. Diese können beispielsweise ein Nick-Moment um eine Querachse des Turms 100, ein Gier-Moment um die Längsachse des Turms und Beschleunigungen des Turmkopfs 102 in horizontalen Richtungen bewirken. Die Querachse des Turms 100 kann in y-Richtung, senkrecht oder im Wesentlichen senkrecht zu der Längsachse des Turms 100 und der Rotorachse verlaufen. Die Querachse kann durch den Turmkopf 102 verlaufen. Die Beschleunigungen können sowohl in x-Richtung, also parallel zur Windrichtung als auch in y-Richtung, also quer zur Windrichtung wirken. Die Beschleunigung in y-Richtung wird im Folgenden als Querbeschleunigung bezeichnet und bewirkt eine Querschwingung des Turms 100.

Mittels geeigneter Messeinrichtungen 112 können die auf den Turm 100 wirkenden Kräfte und Beschleunigungen gemessen werden. Dazu können beispielsweise am Turmkopf 102 oder am Rotor 104 angeordnete Beschleunigungssensoren und Dehnungsmessstreifen eingesetzt werden. Gemäß diesem Ausführungsbeispiel können mittels der Messeinrichtungen 112 das Nick-Moment, das Gier-Moment und die Querbeschleunigung entweder direkt gemessen werden oder es können Basiswerte gemessen werden, aus denen das Nick-Moment, das Gier-Moment und die Querbeschleunigung ermittelt werden können. Die Messeinrichtungen 112 sind ausgebildet, um Informationen über das Nick-Moment, das Gier-Moment und die Querbeschleunigung an eine Bestimmungseinrichtung 114 auszugeben.

Die Bestimmungseinrichtung 114 ist ausgebildet, um basierend auf dem Nick-Moment, dem Gier-Moment und der Querbeschleunigung mindestens eine Stellgröße zum Einstellen individueller Anstellwinkel der Rotorblätter des Rotors 104 zu bestimmen. Ferner kann die Bestimmungseinrichtung 114 ausgebildet sein, um aus der mindestens einen Stellgröße Werte für die individuellen Anstellwinkel zu ermitteln und an eine Steuereinrichtung 116 auszugeben. Zum Bestimmen der Anstellwinkel basierend auf der mindestens einen Stellgröße können geeignete Transformationen eingesetzt werden. Die Steuereinrichtung 116 ist ausgebildet, um die Rotorblätter, basierend auf der mindestens einen Stellgröße oder den Werten für die individuellen Anstellwinkel, auf die durch die mindestens eine Stellgröße definierten Anstellwinkel einzustellen.

Gemäß einem Ausführungsbeispiel können die Messeinrichtungen 112 zusätzlich ausgebildet sein, um ein Biegemoment der Rotorblätter zu erfassen und die Bestimmungseinrichtung 114 kann ausgebildet sein, um die Stellgröße ferner basierend auf den Biegemomenten oder einer daraus auf den Turmkopf 102 wirkenden Querkraft zu bestimmen.

Gemäß einem weiteren Ausführungsbeispiel kann die Bestimmungseinrichtung 114 ausgebildet sein, um als weitere Stellgröße einen Einstellwert für ein Generatormoment des Generators 106 zu bestimmen. Dabei kann die Bestimmungseinrichtung 114 ausgebildet sein, um den Einstellwert für das Generatormoment und die Werte für die individuellen Anstellwinkel gemeinsam zu bestimmen, so dass sie bereits während des Vorgangs des Bestimmens gegenseitig aufeinander abgestimmt werden können. Alternativ können der Einstellwert für das Generatormoment und die Werte für die individuellen Anstellwinkel nacheinander bestimmt werden. Dabei werden zuerst die Werte für die individuellen Anstellwinkel bestimmt. Aus den Werten für die individuellen Anstellwinkel kann ermittelt werden, welche Querkraft auf den Turmkopf 102 wirkt. Der Einstellwert für das Generatormoment kann so eingestellt werden, das das Generatormoment der durch die Anstellwinkel hervorgerufenen Querkraft entgegenwirkt.

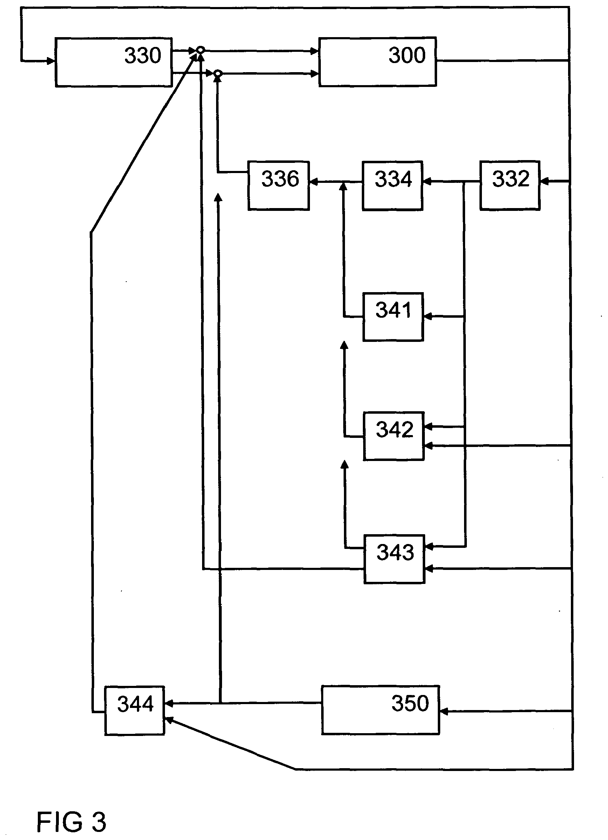

Mögliche Ausführungsformen der Bestimmungseinrichtung 114 werden anhand von Fig. 3 näher beschrieben.

Fig. 2 zeigt eine schematische Darstellung eines Rotors 104 einer Windenergieanlage, gemäß einem Ausführungsbeispiel der vorliegenden Erfindung. Der Rotor 104 weist drei Rotorblätter auf, die in gleichen Winkelabständen voneinander beabstandet sind. Der Rotor 104 kann um seine Rotorachse eine Drehbewegung durchführen. Ein Drehwinkel der Drehbewegung ist durch $\Omega$ gekennzeichnet. Die drei Rotorblätter können jeweils um ihre Längsachse, die im Wesentlichen senkrecht zur Rotorachse ausgerichtet ist, gedreht werden. Entsprechende Anstellwinkel sind durch $\beta_1$, $\beta_2$, $\beta_3$ gekennzeichnet.

Fig. 3 zeigt ein Blockschaltbild eines Reglers, gemäß einem Ausführungsbeispiel der Erfindung. Gezeigt ist eine Windkraftanlage 300, die in Form der in Fig. 1 gezeigten Windenergieanlage ausgeführt sein kann. Eine Betriebsführung 330 ist ausgebildet, um Messwerte von der Windkraftanlage 300 zu empfangen, daraus Einstellwerte für die Windkraftanlage 300 zu bestimmen. Die Betriebsführung 330 ist ausgebildet, um einen Wert für das Generatormoment $M_{Gen}$ und Werte für die Anstellwinkel $\beta_{1,2,3}$ der Rotorblätter zu bestimmen und auszugeben.

Die Anstellwinkel der Rotorblätter können mittels eines standardmäßigen IPC-Reglers 332, 334, 336 individuell eingestellt werden. Die Transformationseinrichtung 332 ist ausgebildet, um basierend auf an der Windkraftanlage 300 gemessenen Schlagbiegemomenten $M_i$ an den Rotorblättern ein auf die Windkraftanlage 300 wirkendes Nick-Moment $M_D$ und Gier-Moment $M_Q$ zu bestimmen. Dazu kann die Transformationseinrichtung 332 ausgebildet sein, um eine inverse Transformation, beispielsweise eine $DQ^{-1}$-Transformation (inverse direct-quadrature transformation) durchzuführen, bei der eine Transformation zwischen einem dreiphasigen rotierenden Koordinatensystem und einem stationären Koordinatensystem durchgeführt wird. Der Regler 334 kann ausgebildet sein, um basierend auf dem Nick-Moment $M_D$ und dem Gier-Moment $M_Q$ Stellgrößen $\beta_D$, $\beta_Q$ zu bestimmen. Die Transformationseinrichtung 336 ist ausgebildet, um basierend auf den Stellgrößen $\beta_D$, $\beta_Q$ individuelle Abweichungen $\Delta\beta_{1,2,3}$ der Anstellwinkel der Rotorblätter zu bestimmen. Dazu kann die Transformationseinrichtung 336 ausgebildet sein, um eine Transformation, beispielsweise eine DQ-Transformation (direct-quadrature transformation) durchzuführen, bei der eine Transformation zwischen einem stationären Koordinatensystem und einem dreiphasigen rotierenden Koordinatensystem durchgeführt wird.

Die Abweichungen $\Delta\beta_{1,2,3}$ werden mit den von der Betriebsführung ausgegebenen Anstellwinkeln $\beta_{1,2,3}$ kombiniert, so dass der Windkraftanlage 300 die mit den Abweichungen $\Delta\beta_{1,2,3}$ kombinierten Anstellwinkeln $\beta_{1,2,3}$ zugeführt werden.

Im Folgenden wird eine Ausführungsform des IPC-Reglers 332, 334, 336 detailliert beschrieben.

Die IPC-Regelung ist ein mögliches Verfahren, um die Belastungen der Windkraftanlage basierend auf der sogenannten DQ- oder Coleman-Transformation zu reduzieren. Dabei berechnet sich der Pitchwinkel $\beta_i$ für jedes einzelne Rotorblatt aus

$$\beta_i = \beta_{CPC} + \beta_1^D cos(\Omega_i) + \beta_1^Q sin(\Omega_i) + \beta_2^D cos(2\Omega_i) + \beta_2^Q sin(2\Omega_i) + \ldots$$

Dabei ist $\beta_{CPC}$ der von der Betriebebsführung vorgegebene kollektive Pitchwinkel und $\Omega_i$ mit i = 1, 2, 3 die Drehposition des jeweiligen Rotorblattes, wobei der Winkel 0 Grad beträgt, wenn das Rotorblatt senkrecht nach oben zeigt. Die Stellgrößen $\beta_1^D$ und $\beta_1^Q$ werden durch den IPC-Regler berechnet, um die Gier- und Nick-Momente des Rotors auf Null zu regeln. Werden bei der individuellen Pitchregelung nur $\beta_1^D$ und $\beta_1^Q$ verwendet, so spricht man von 1p-IPC. Alle $\beta_2^D$, $\beta_2^Q$ und höher sind dabei 0. Im Folgenden wird nur 1p-IPC betrachtet. Dort werden die $\beta_1^D$ und $\beta_1^Q$ durch einen IPC-Regler berechnet, mit dem Ziel die Nick- und Gier-Momente auf Null zu regeln. Das Vorgehen ist dabei wie folgt: Die Schlagbiegemomente $M_i$ an den drei Rotorblättern werden gemessen. Durch die inverse Coleman-Transformation werden daraus die Nick- und Gier-Momente berechnet:

$$\overline{M}_1^D = \sum_{i=1}^{3} M_i cos\Omega_i$$

$$\overline{M}_1^Q = \sum_{i=1}^{3} M_i sin\Omega_i$$

Anschließend können diese Signale durch ein Filter F gefiltert werden, da sie mit störenden Anteilen überlagert sind. Alternativ können die Nick- und Gier-Momente $\overline{M}_1^D$, $\overline{M}_1^Q$ auch über andere Methoden gemessen oder berechnet werden.

$$M_1^D = F \cdot \bar{M}_1^D$$

$$M_1^Q = F \cdot \bar{M}_1^Q$$

Aus diesen Messignalen kann ein entsprechend ausgelegter Regler K nun die Stellsignale berechnen

$$\begin{pmatrix} \beta_1^D \\ \beta_1^Q \end{pmatrix} = K \cdot \begin{pmatrix} M_1^D \\ M_1^Q \end{pmatrix}$$

Zur Dämpfung der Turmschwingung können die Schwingungen des Turmes in der Windrichtung durch den Pitchwinkel $\beta_{CPC}$ gedämpft werden. Dazu wird von einem Regler die Turmkopfbeschleunigung in Fore-Aft-Richtung, also in Windrichtung, gemessen und der Pitchwinkel $\beta_{CPC}$ so berechnet, dass die Schubkraft auf den Rotor entsprechend vergrößert oder verkleinert wird, um mit den daraus resultierenden Schubkräften die Schwingung dämpfen.

Für die Schwingungen des Turmes quer zur Windrichtung kann das Generatormoment zur Dämpfung herangezogen werden. Wird das Moment vergrößert, so wird der Turm stärker zur Seite ausgelenkt. Bei einer Reduktion des Generatormoments geht die Auslenkung entsprechend zurück. Dieses Verhalten kann nun verwendet werden, um die Schwingungen quer zur Windrichtung zu dämpfen, indem ein Regler die entsprechende Turmkopfbeschleunigung misst und das Generatormoment so modifiziert, dass die Querschwingung gedämpft wird. Dieses Verfahren hat den Nachteil, dass dadurch die abgegebene Leistung der Anlage an das Stromnetz beeinflusst wird.

Erfindungsgemäß können die Querschwingungen des Turmes einer Windkraftanlage gedämpft werden, indem dazu individuelle Pitchwinkel verwendet werden. Ziel des IPC-Reglers ist es damit nicht mehr nur die Nick- und Gier-Momente zu reduzieren, sondern zusätzlich die seitlichen Turmschwingungen zu dämpfen. Außerdem kann die nach dem Stand der Technik bekannte IPC-Regelung Querschwingungen des Turms anregen. Dies wird durch die Erfindung verhindert, da der IPC-Regler damit so ausgelegt werden kann, dass er die Querschwingungen nicht anregt.

Der erfindungsgemäße Ansatz basiert auf der Kenntnis der linearisierten Differentialgleichung der Turmquerschwingung

$$\ddot{y} = -\frac{C}{m}y - \frac{D}{m}\dot{y} - \frac{A}{m}\beta_1^D - k\frac{i_{GB}}{m}M_{gen}$$

Dabei ist y die Auslenkung des Turms in Querrichtung, C die Federkonstante und D die Dämpfungskonstante des Turms. Diese lassen sich aus den Auslegungsdaten des Turms berechnen, m ist die Turmkopfmasse, welche bekannt ist. Die Konstante k beschreibt die Kopplung zwischen einem angreifenden Drehmoment am Turmkopf und der daraus resultierenden Auslenkung des Turmkopfes. Sie lässt sich aus den Auslegungsdaten des Turmes berechnen.

Als Näherung kann auch die für einen linearen Biegebalken geltende Konstante $k = \dfrac{3}{2\,Turmhöhe}$ verwendet werden, $i_{GB}$ ist die Getriebeübersetzung, $M_{gen}$ das Generatormoment. Die Konstante A lässt sich aus der Aerodynamik der Windkraftanlage berechnen. Dazu wird das Kennfeld $c_M(\lambda, \beta)$ der Windkraftanlage verwendet. Mit Hilfe des Kennfeldes lässt sich das Rotordrehmoment berechnen. Aus diesem folgt die Näherung für die Konstante A. Es gilt dabei $A = \dfrac{3}{R}\dfrac{\partial M}{\partial \beta}$

mit dem Rotorradius R und der partiellen Ableitung des Rotordrehmornents nach dem Pitchwinkel $\dfrac{\partial M}{\partial \beta}$ im momentanen Arbeitspunkt.

Somit erfolgt eine Anregung der Querschwingung durch den Term $\dfrac{A}{m}\beta_1^D$.

Die Turmquerschwingung wird nur durch $\beta_1^D$ angeregt. Dieser Anteil des Pitchwinkels führt dazu, dass der Pitchwinkel des Rotorblattes erhöht wird, wenn es nach oben zeigt und reduziert wird, wenn es nach unten zeigt. Dabei bleibt das auf die Rotorwelle wirkende Drehmoment konstant. Es werden damit aber in die seitliche Richtung wirkende Kräfte erzeugt und das Nick-Moment der Anlage beeinflusst. Der IPC-Regler kann nun also die Stellgröße $\beta_1^D$ dazu verwenden, die Querschwingungen zu dämpfen und die Nick-Momente auf Null zu regeln.

Eine Anregung durch $\beta_2^D$ erfolgt nicht, deshalb muss hier nur 1p-IPC betrachtet werden. IPC mit noch höherer Ordnung kann wieder zu Anregungen der Querschwingung führen, wird aber in der Realität nicht eingesetzt, da die Blätter dazu zu schnell gedreht werden müssten.

Dieser Ansatz kann in den in Fig. 3 gezeigten Einrichtungen 341, 342, 343, 344 umgesetzt werden. Dabei sind die Einrichtungen 341, 342, 343, 344 Alternativen, die sich gegenseitig ausschließen. Es ist nur eine der Varianten 341, 342, 343, 344 gleichzeitig nutzbar.

Für die verschiedenen Varianten 341, 342, 343, 344 der Möglichkeiten zur Unterdrückung der Anregung der Turmquerschwingungen gilt jeweils

$$\Delta\beta_i = \beta_1^D cos(\Omega_i) + \beta_1^Q sin(\Omega_i) + \beta_2^D cos(2\Omega_i) + \beta_2^Q sin(2\Omega_i) + \dots$$

Diese Gleichung beschreibt die DQ-Transformation 336.

Die Einrichtung 341 ist anstelle des Reglers 334 angeordnet. Die Einrichtung 341 ist ausgebildet, um basierend auf dem Nick-Moment $M_D$ und dem Gier-Moment $M_Q$ die Stellgrößen $\beta_D$, $\beta_Q$ entweder zu bestimmen oder zu beeinflussen. Wird die Einrichtung 341 anstelle des Reglers 334 eingesetzt, so wird die Differentialgleichung der Turmquerschwingung bei der Auslegung des IPC-Reglers mit berücksichtigt und der Regler wird so ausgelegt, dass eine Anregung der Querschwingung möglichst nicht erfolgt. Dies ist möglich, indem bei der Auslegung gefordert wird, dass der Regler in $\beta_1^D$ die erste Turmeigenfrequenz unterdrückt.

Dadurch erfolgt keine aktive Dämpfung der Querschwingung, sondern es wird nur die Anregung dieser Schwingung durch den IPC-Regler unterdrückt.

Die Einrichtung 342 ist anstelle des Reglers 334 angeordnet. Die Einrichtung 342 ist ausgebildet, um basierend auf dem Nick-Moment $M_D$ und dem Gier-Moment $M_Q$ sowie der an der Windkraftanlage 300 gemessenen Querbeschleunigung $a_{quer}$ die Stellgrößen $\beta_D$, $\beta_Q$ entweder zu bestimmen oder zu beeinflussen. Wird die Einrichtung 341 anstelle des Reglers 334 eingesetzt, so erhält der Regler als zusätzliches Messsignal die gemessene Turmkopfquerbeschleunigung. Dadurch kann die Schwingung aktiv gedämpft werden. Die Performance kann damit wesentlich verbessert werden.

Als weiteres Messsignal kann das Biegemoment der Rotorblätter in der Rotorebene verwenden werden. Aus den Biegemomenten lässt sich die Querkraft näherungsweise berechnen.

Die Einrichtung 343 ist anstelle des Reglers 334 angeordnet. Die Einrichtung 343 ist ausgebildet, um basierend auf dem Nick-Moment $M_D$ und dem Gier-Moment $M_Q$ sowie der an der Windkraftanlage 300 gemessenen Querbeschleunigung $a_{quer}$ die Stellgrößen $\beta_D$, $\beta_Q$ entweder zu bestimmen oder zu beeinflussen. Zusätzlich ist die Einrichtung 343 ausgebildet, um eine Abweichung des Generatormoments $\Delta M_{Gen}$ zu bestimmen. Die Abweichung $\Delta M_{Gen}$ wird mit dem von der Betriebsführung ausgegebenen Generatormoment $M_{Gen}$ kombiniert, so dass der Windkraftanlage 300 das mit der Abweichung $\Delta M_{Gen}$ kombinierte Generatormoment zugeführt wird. Wird die Einrichtung 341 anstelle des Reglers 334 eingesetzt, so erhält der Regler als weitere Stellgröße das Generatormoment. Damit besteht die Möglichkeit die Turmquerschwingung nicht nur über $\beta_1^D$ zu beeinflussen, sondern auch über das Generatormoment. Der Nachteil dieser Variante ist, dass das Generatormoment die abgegebene Leistung der Anlage beeinflusst.

Die Einrichtung 344 kann im Zusammenhang mit einem beliebig ausgebildeten IPC-Regler 350 eingesetzt werden. Der Regler 350 hat dabei das Ziel der Unterdrückung von Nick- und Giermomenten. Der Regler kann Messgrößen der Windkraftanlage 300, beispielsweise die Biegemomente der Rotorblätter empfangen und basierend darauf Abwei-chungen $\Delta\beta_i$ der Anstellwinkel bestimmen. Die Abweichungen $\Delta\beta_i$ werden mit den von der Betriebsführung ausgegebenen Anstellwinkeln $\beta_{1,2,3}$ kombiniert, so dass der Windkraftanlage 300 die mit den Abweichungen $\Delta\beta_i$ kombinierten Anstell-winkel zugeführt werden. Die Einrichtung 344 ist ausgebildet, um die Abweichungen $\Delta\beta_i$ und die gemessene Querbe-schleunigung des Turms zu empfangen und basierend darauf eine Abweichung des Generatormoments $\Delta M_{Gen}$ zu bestimmen. Die Abweichung $\Delta M_{Gen}$ wird mit dem von der Betriebsführung ausgegebenen Generatormoment $M_{Gen}$ kombiniert, so dass der Windkraftanlage 300 das mit der Abweichung $\Delta M_{Gen}$ kombinierte Generatormoment zugeführt wird.

Mittels der Einrichtung 344 ist eine Dämpfung der Turmquerschwingungen unabhängig von der Realisierung der IPC-Regelung durch die DQ-Transformation. Dadurch ist dieser Ansatz für jeden möglichen individuellen Pitchregler implementierbar. Es wird angenommen, dass ein beliebiger IPC-Regler als Ausgangsgrößen Abweichungen $\Delta\beta_i$ der Pitchwinkel der einzelnen Blätter vom kollektiven Pitchwinkel $\beta_{CPC}$ als Stellgrößen verwendet.

EP 2 582 972 B1

$$\Delta\beta_i = \beta_i - \beta_{CPC}$$

Nun kann die resultierende Querkraft auf den Turm durch die unterschiedlichen Anstellwinkel berechnet werden als

$$F_y = A \sum_{i=1}^{3} \Delta\beta_i \cos\Omega_i$$

Zusätzlich steht wieder als Messgröße die Turmkopfquerbeschleunigung zur Verfügung. Nun lässt sich ein Regler 344 entwerfen, der über einen Eingriff auf das Generatormoment die Anregung der Querschwingung durch $F_y$ unterdrückt. Ein Eingriff über die individuellen Pitchwinkel ist so nicht möglich, da sonst der vorhandene IPC-Regler 350 ungünstig beeinflusst werden könnte.

Die erfindungsgemäßen Ansätze ermöglichen es, die Schwingung quer zur Windrichtung zu dämpfen. Die Nick-Momente, welche vom Rotor auf den Turmkopf wirken sind verkoppelt mit der seitlichen Kraft, die der Rotor auf den Turmkopf aufbringt. Das Gier-Moment ist davon unabhängig. Erfindungsgemäß erfolgt eine Verwendung von IPC um sowohl die Nick- und Gier-Momente zu reduzieren, als auch die seitliche Turmschwingung nicht anzuregen, wie es beispielsweise mittels der Einrichtung 334 möglich ist, oder sogar zu dämpfen, wie es beispielsweise mittels der Einrichtung 341 möglich ist. Dazu wird sowohl die seitliche Turmkopfbeschleunigung gemessen als auch die Nick- und Gier-Momente, beispielsweise über Dehnungsmessstreifen, die Auslenkung der Rotorblätter in Schlagrichtung oder die Verbiegung der Rotorwelle.

Somit erfolgt eine Kombination der Reduktion der Gier- und Nick-Momente in Kombination mit der Dämpfung der lateralen Turmschwingung. Beide Aspekte werden von einem Regler betrachtet, so dass dieser bei sich widersprechenden Anforderungen abwägen kann, um die beste Reduktion zu erreichen.

Im Folgenden wird an Hand eines Ausführungsbeispiels beschrieben wie der Regler dazu optimiert werden kann.

An der Anlage werden die Schlagbiegemomente der drei Rotorblätter, oder äquivalente Größen wie die Auslenkung in Schlagrichtung, und die seitliche Turmkopfbeschleunigung gemessen und einem Regler zugeführt. Dieser gibt als Stellgrößen drei individuelle Pitchwinkel für die drei Rotorblätter aus. Im Regler werden aus den drei Schlagbiegemomenten mittels der DQ-Transformation und einer Filterung das Nick-Moment $M_D$ und das Gier-Moment $M_Q$ berechnet. Diese werden dann, zusammen mit der seitlichen Turmkopfbeschleunigung, dem eigentlichen Kern-Regler K zugeführt. Dieser berechnet die Stellgrößen $\beta_D$, $\beta_Q$ die dann mittels der inversen DQ-Transformation in drei individuelle Pitchwinkel umgerechnet und an die Anlage ausgegeben werden.

Im Folgenden wird an Hand eines Ausführungsbeispiels beschrieben wie der Kern-Regler K entworfen wird. Dabei sind die DQ-Transformation und die Signal-Filterung nicht einbezogen.

Für den Reglerentwurf wird gemäß diesem Ausführungsbeispiel das H-unendlich (englisch: H-infinity) Reglerentwurfsverfahren eingesetzt. Das Reglerentwurfsverfahren sucht für ein System P einen Regler K so, dass die "schlimmste" mögliche Störung am Störeingang w möglichst wenig verstärkt, bzw. möglichst stark abgeschwächt, auf den Performance-Ausgang z übertragen wird. Es wird also der Quotient Signalenergie(z)/Signalenergie(w) für das "schlimmste" w minimiert. Dieser Quotient ist genau die H-unendlich-Norm des geschlossenen Regelkreises, bestehend aus dem System P und dem Regler K.

Bezogen auf eine Windkraftanlage. wird zunächst eine Systembeschreibung der Windkraftanlage in Form eines Differentialgleichungssystems erstellt. Der Störeingang w enthält eine Beschreibung der Asymmetrie des Windfeldes, welches auf die Anlage trifft. Er besteht aus zwei Komponenten vc und vs, welche die vertikale und die horizontale Schräganströmung beschreiben. Als Performance-Ausgang z wird der Vektor bestehend aus dem Nick-Moment $M_D$, dem Gier-Moment $M_Q$ und der seitlichen Turmkopfbeschleunigung verwendet. Genau der gleiche Vektor wird auch als Messausgang y verwendet.

Der Performance-Ausgang wird noch mit einer Gewichtungsfunktion W gewichtet. Damit können im Frequenzbereich bestimmte Regionen stärker gewichtet werden. So ist es beispielsweise sinnvoll im Bereich der ersten Eigenfrequenz des Turmes für die seitliche Turmkopfbeschleunigung ein höheres Gewicht zu wählen, damit diese vom Regler besonders gut unterdrückt wird. Als Stellgrößen hat der Regler die Pitchwinkel $\beta_D$, $\beta_Q$ zur Verfügung.

Das Entwurfsverfahren findet einen Regler so, dass im Performance-Ausgang die Störung w durch die verschiedenen Schräganströmungen möglichst nicht mehr sichtbar ist. Dabei wird die Störung gleichzeitig in allen drei Komponenten des Performance-Vektors unterdrückt.

Durch eine Änderung der Gewichtungsfunktion können die drei Komponenten nun untereinander abgewägt werden. Ein hohes Gewicht kann für das Nick-Moment $M_D$ und das Gier-Moment $M_Q$ für kleine Frequenzen gewählt werden. Dies ermöglicht eine stationäre Unterdrückung der Störung. Ein niedriges Gewicht kann für das Nick-Moment $M_D$ und das Gier-Moment $M_Q$ und die Turmkopfbeschleunigung für große Frequenzen gewählt werden. Dadurch kann verhindert werden, dass die Stellgrößen hochfrequente Anteile enthalten, denen die Aktoren nicht folgen können. Ein hohes Gewicht kann für die seitliche Turmkopfbeschleunigung für niedrige Frequenzen mit einem Maximum (Peak) bei der ersten Turmeigenfrequenz gewählt werden. Dadurch wird die erste Turmeigenfrequenz besonders stark unterdrückt.

Zwischen dem Nick-Moment $M_D$ und dem Gier-Moment $M_Q$ und der seitlichen Turmkopfbeschleunigung kann nun noch abgewägt werden, indem die einzelnen Gewichtungsfunktionen insgesamt nach oben oder unten verschoben werden. Wird die Gewichtung der Turmkopfbeschleunigung erhöht, so wird die Turmkopfbeschleunigung stärker gedämpft als die Momente $M_D$, $M_Q$ reduziert werden. Umgekehrt werden die Momente $M_D$, $M_Q$ stärker reduziert, wenn die Momente $M_D$, $M_Q$ stärker gewichtet werden.

Nachdem diese Auslegung erfolgt ist, steht der Regler K fest. Es wird also während dem Betrieb keine weitere Anpassung des Reglers vorgenommen. Der Regler wählt automatisch den optimalen Eingriff im Sinne der formulierten Anforderungen.

Im Zeitbereich gibt es keine Kostenfunktion im klassischen Sinne. Stattdessen erfolgt die Formulierung der Kostenfuktion im Frequenzbereich über die Wahl der Gewichtungsfunktion für den Performance-Ausgang.

Die gezeigten Ausführungsbeispiele sind nur beispielhaft gewählt. Die beschriebenen Ausführungsbeispiele ermöglichen eine Verhinderung der Turmschwingungsanregung bei IPC. Zur erfindungsgemäßen Kombination von IPC-Regelung mit einer Messung der Querbeschleunigung des Turmkopfes kann eine vorhandene oder eine zusätzliche Sensorik eingesetzt werden. Ein Eingriff des IPC-Reglers in die Momentenregelung des Generators kann zu Leistungsschwankungen führen. Auch kann die Turmquerdynamik nur bei der Auslegung des IPC-Reglers berücksichtigt werden, ohne das zusätzliche Messignale verwendet werden. Der erfindungsgemäße Ansatz kann für eine IPC-Regelung für Windkraftanlagen eingesetzt werden. Eine solche Regelung kann als Add-On für bestehende Anlagenregelungen dienen. Die IPC-Regelung soll dabei keine Turmquerschwingungen anregen. Zusätzlich kann eine aktive Dämpfung der Querschwingung erfolgen.

Bezugszeichenliste

| | |
|---|---|
| 100 | Turm |
| 102 | Turmkopf |
| 104 | Rotor |
| 106 | Generator |
| 112 | Messeinrichtung |
| 114 | Bestimmungseinrichtung |
| 116 | Steuereinrichtung |
| 300 | Windenergieanlage |
| 330 | Betriebsführung |
| 332 | Transformationseinrichtung |
| 334 | Regler |
| 336 | Transformationseinrichtung |
| 341 | Regler |
| 342 | Regler |
| 343 | Regler |
| 344 | Regler |
| 350 | Regler |

**Patentansprüche**

1.  Verfahren zur Verhinderung einer Querschwingung eines Turms (100) einer Windenergieanlage mit einem Rotor mit mindestens zwei Rotorblättern mit verstellbaren Anstellwinkeln ($\beta_1$, $\beta_2$, $\beta_3$), das folgenden Schritt umfasst: Bestimmen (341, 342, 343) einer Stellgröße zum Einstellen der Anstellwinkel, basierend auf einer Information über ein mit einer ersten Gewichtung gewichtetes Nick-Moment des Rotors, ein mit einer zweiten Gewichtung gewichtetes Gier-Moment des Rotors und eine mit einer dritten Gewichtung gewichteten Querbeschleunigung des Turms (100), wobei ein entgegenwirkendes Moment erzeugt wird, das dem Nick-Moment und dem Gier-Moment entgegenwirkt ohne eine Querschwingung des Turms anzuregen, wenn die Anstellwinkel basierend auf der Stellgröße eingestellt werden.

**2.** Verfahren gemäß Anspruch 1, bei dem beim Bestimmen (341) der Stellgröße die erste Eigenfrequenz des Turms in Bezug auf die Querschwingung in einem zeitlichen Verlauf der Stellgröße unterdrückt wird.

**3.** Verfahren gemäß einem der vorangegangenen Ansprüche, bei dem die Stellgröße ferner basierend auf einer Information über eine Querbeschleunigung eines Turmkopfes des Turms so bestimmt (342) wird, dass eine resultierende Querkraft der Querbeschleunigung entgegenwirkt, wenn die Anstellwinkel ($\beta_1$, $\beta_2$, $\beta_3$) basierend auf der Stellgröße eingestellt werden.

**4.** Verfahren gemäß einem der vorangegangenen Ansprüche, bei dem die Stellgröße so bestimmt (343) wird, das die Stellgröße ferner ausgebildet ist, um ein Generatormoment eines Generators (106) der Windkraftanlage einzustellen, wobei ein der Querbeschleunigung entgegenwirkendes Moment erzeugt wird, wenn das Generatormoment basierend auf der Stellgröße eingestellt wird.

**5.** Verfahren gemäß einem der vorangegangenen Ansprüche, mit einem Schritt des Einstellens eines Verhältnisses der Gewichtungen zueinander, um einen Einfluss der Stellgröße auf das Nick-Moment und das Gier-Moment im Verhältnis zu einem Einfluss der Stellgröße auf die Querbeschleunigung festzulegen, wenn die Anstellwinkel ($\beta_1$, $\beta_2$, $\beta_3$) basierend auf der Stellgröße eingestellt werden.

**6.** Verfahren gemäß einem der vorangegangenen Ansprüche, bei dem die Gewichtungen jeweils im Frequenzbereich des Nick-Moments, des Gier-Moments und der Querbeschleunigung erfolgt.

**7.** Verfahren gemäß einem der vorangegangenen Ansprüche, das ferner die folgenden Schritte umfasst:

Bestimmen einer auf den Turm wirkenden Querkraft basierend auf Abweichungen individueller Anstellwinkel der Rotorblätter gegenüber einem kollektiven Anstellwinkel aller Rotorblätter; und
Bestimmen (344) eines Stellwertes zum Einstellen eines der Querkraft entgegenwirkenden Generatormoments eines Generators (106) der Windenergieanlage basierend auf der Querkraft und der Querbeschleunigung des Turms, wobei ein der Querbeschleunigung entgegenwirkendes Moment erzeugt wird, wenn das Generatormoment basierend auf dem Stellwert eingestellt wird.

**8.** Vorrichtung zur Verhinderung einer Querschwingung eines Turms (100) einer Windenergieanlage mit einem Rotor mit mindestens zwei Rotorblättern mit verstellbaren Anstellwinkeln ($\beta_1$, $\beta_2$, $\beta_3$), mit folgenden Merkmalen:

einer Einrichtung (114; 341, 342, 343) zum Bestimmen einer Stellgröße zum Einstellen der Anstellwinkel, basierend auf einer Information über ein mit einer ersten Gewichtung gewichtetes Nick-Moment des Rotors, ein mit einer zweiten Gewichtung gewichtetes Gier-Moment des Rotors und eine mit einer dritten Gewichtung gewichteten Querbeschleunigung des Turms (100), wobei ein entgegenwirkendes Moment erzeugt wird, das dem Nick-Moment und dem Gier-Moment entgegenwirkt ohne eine Querschwingung des Turms anzuregen, wenn die Anstellwinkel basierend auf der Stellgröße eingestellt werden; und
einer Einrichtung (344) zum Bestimmen einer auf den Turm wirkenden Querkraft basierend auf Abweichungen individueller Anstellwinkel der Rotorblätter gegenüber einem kollektiven mittleren Anstellwinkel aller Rotorblätter und zum Bestimmen eines Stellwertes zum Einstellen eines Generatormoments eines Generators (106) der Windkraftanlage basierend auf der Querkraft und einer Querbeschleunigung eines Turmkopfes des Turms, wobei ein der Querbeschleunigung entgegenwirkendes Moment erzeugt wird, wenn das Generatormoment basierend auf dem Stellwert eingestellt wird.

**9.** Computer-Programmprodukt mit Programmcode zur Durchführung des Verfahrens nach einem der Ansprüche 1 bis 7, wenn das Programm auf einer Vorrichtung ausgeführt wird.

**Claims**

**1.** A method for preventing a transverse oscillation of a tower (100) of a wind power plant having a rotor having at least two rotor blades with adjustable pitch angles ($\beta_1$, $\beta_2$, $\beta_3$), which method comprises the following step:
determining (341, 342, 343) a manipulated variable for setting the pitch angles on the basis of information about a pitching moment of the rotor which is weighted with a first weighting, a yawing moment of the rotor which is weighted with a second weighting and a transverse acceleration of the tower (100) which is weighted with a third weighting, wherein a counteracting torque is generated which counteracts the pitching moment and the yawing moment without exciting a transverse oscillation of the tower when the pitch angles are set on the basis of the manipulated variable.

2. The method as claimed in claim 1, in which during the determination (341) of the manipulated variable the first natural frequency of the tower is suppressed with respect to the transverse oscillation in a time profile of the manipulated variable.

3. The method as claimed in one of the preceding claims, in which the manipulated variable is also determined (342) on the basis of information about a transverse acceleration of a tower head of the tower in such a way that a resulting transverse force counteracts the transverse acceleration when the pitch angles ($\beta_1$, $\beta_2$, $\beta_3$) are set on the basis of the manipulated variable.

4. The method as claimed in one of the preceding claims, in which the manipulated variable is determined (343) in such a way that the manipulated variable is also designed to set a generator torque of a generator (106) of the wind power plant, wherein a torque which counteracts the transverse acceleration is generated when the generator torque is set on the basis of the manipulated variable.

5. The method as claimed in one of the preceding claims, having a step of setting a ratio of the weightings with respect to one another in order to define an influence of the manipulated variable on the pitching moment and the yawing moment in relation to an influence of the manipulated variable on the transverse acceleration when the pitch angles ($\beta_1$, $\beta_2$, $\beta_3$) are set on the basis of the manipulated variable.

6. The method as claimed in one of the preceding claims, in which the weightings are each made in the frequency range of the pitching moment, of the yawing moment and of the transverse acceleration.

7. The method as claimed in one of the preceding claims, which further comprises the following steps:

   determining a transverse force, acting on the tower, on the basis of deviations of individual pitch angles of the rotor blades with respect to a collective pitch angle of all the rotor blades; and
   determining (344) a setting value for setting a generator torque of a generator (106) of the wind power plant which counteracts the transverse force on the basis of the transverse force and the transverse acceleration of the tower, wherein a torque which counteracts the transverse acceleration is generated when the generator torque is set on the basis of the setting value.

8. An apparatus for preventing a transverse oscillation of a tower (100) of a wind power plant having a rotor having at least two rotor blades with adjustable pitch angles ($\beta_1$, $\beta_2$, $\beta_3$), having the following features:
   a device (114; 341, 342, 343) for determining a manipulated variable for setting the pitch angles on the basis of information about a pitching moment of the rotor which is weighted with a first weighting, a yawing moment of the rotor which is weighted with a second weighting and a transverse acceleration of the tower (100) which is weighted with a third weighting, wherein a counteracting torque is generated which counteracts the pitching moment and the yawing moment without exciting a transverse oscillation of the tower when the pitch angles are set on the basis of the manipulated variable, and a device (344) for determining a transverse force, acting on the tower, on the basis of deviations of individual pitch angles of the rotor blades with respect to a collective, mean pitch angle of all the rotor blades and for determining a setting value for setting a generator torque of a generator (106) of the wind power plant on the basis of the transverse force and a transverse acceleration of a tower head of the tower, wherein a torque which counteracts the transverse acceleration is generated when the generator torque is set on the basis of the setting value.

9. A computer program product having program code for carrying out the method as claimed in one of claims 1 to 7 when the program is run on an apparatus.

**Revendications**

1. Procédé pour empêcher l'oscillation transversale d'un pylône (100) d'une génératrice éolienne munie d'un rotor comportant au moins deux pales de rotor dont l'angle d'orientation ($\beta_1$, $\beta_2$, $\beta_3$) est ajustable, comprenant l'étape suivante :
   détermination (341, 342, 343) d'une grandeur de réglage pour le réglage des angles d'orientation selon des informations concernant un moment de tangage du rotor pondéré avec un premier facteur de pondération, un moment de lacet du rotor pondéré avec un deuxième facteur de pondération et une accélération transversale du pylône (100) pondérée avec un troisième facteur de pondération, un moment opposé au moment de tangage et au moment de lacet étant créé sans provoquer d'oscillation transversale du pylône quand les angles d'orientation sont réglés sur la base de la grandeur de réglage.

2. Procédé selon la revendication 1 dans lequel, lors de la détermination (341) de la grandeur de réglage, la première fréquence de résonance du pylône en relation avec l'oscillation transversale est supprimée dans une évolution dans le temps de la grandeur de réglage.

3. Procédé selon l'une des revendications précédentes, dans lequel la grandeur de réglage est en outre déterminée (342) sur la base d'une information concernant une accélération transversale d'une tête du pylône de telle manière qu'une force transversale en résultant s'oppose à l'accélération transversale quand les angles d'orientation ($\beta_1$, $\beta_2$, $\beta_3$) sont réglés sur la base de la grandeur de réglage.

4. Procédé selon l'une des revendications précédentes, dans lequel la grandeur de réglage est déterminée (343) de telle manière qu'elle est constituée en outre pour régler un couple de générateur d'un générateur (106) de la génératrice éolienne, un moment qui opposé à l'accélération transversale étant créé quand le couple du générateur est réglé sur la base de la grandeur de réglage.

5. Procédé selon l'une des revendications précédentes, avec une étape de réglage d'un rapport entre les pondérations pour définir l'influence de la grandeur de réglage sur le moment de tangage et le moment de lacet par rapport à une influence de la grandeur de réglage sur l'accélération transversale quand les angles d'orientation ($\beta_1$, $\beta_2$, $\beta_3$) sont réglés sur la base de la grandeur de réglage.

6. Procédé selon l'une des revendications précédentes, dans lequel les pondérations sont effectuées chacune dans la plage de fréquences du moment de tangage, du moment de lacet et de l'accélération transversale.

7. Procédé selon l'une des revendications précédentes, comprenant en outre les étapes suivantes :

détermination d'une force transversale agissant sur le pylône sur la base de déviations des angles d'orientation individuels des pales de rotor par rapport à un angle d'orientation collectif de toutes les pales de rotor et détermination (344) d'une valeur de réglage pour le réglage d'un couple de générateur d'un générateur (106) de la génératrice éolienne qui s'oppose à la force transversale, sur la base de la force transversale et de l'accélération transversale du pylône, un moment opposé à l'accélération transversale étant produit quand le couple du générateur est réglé sur la base de la valeur de réglage.

8. Dispositif pour empêcher une oscillation transversale d'un pylône (100) d'une génératrice éolienne munie d'un rotor comportant au moins deux pales de rotor à angle d'orientation ($\beta_1$, $\beta_2$, $\beta_3$) ajustable, comprenant :

une installation (114; 341, 342, 343) pour déterminer une grandeur de réglage pour le réglage des angles d'orientation, sur la base d'informations concernant un moment de tangage du rotor pondéré avec un premier facteur de pondération, un moment de lacet du rotor pondéré avec un deuxième facteur de pondération et une accélération transversale du pylône (100) pondérée avec un troisième facteur de pondération, un moment opposé au moment de tangage et au moment de lacet étant créé sans provoquer d'oscillation transversale du pylône quand les angles d'orientation sont réglés sur la base de la grandeur de réglage et une installation (344) pour déterminer une force transversale agissant sur le pylône sur la base de déviations des angles d'orientation individuels des pales de rotor par rapport à un angle d'orientation collectif de toutes les pales de rotor et pour déterminer une valeur de réglage pour le réglage d'un couple de générateur d'un générateur (106) de la génératrice éolienne qui s'oppose à la force transversale, sur la base de la force transversale et d'une l'accélération transversale de la tête du pylône, un moment opposé à l'accélération transversale étant produit quand le couple du générateur est réglé sur la base de la valeur de réglage.

9. Produit logiciel pour ordinateur avec un code de programmation pour la mise en œuvre du procédé selon l'une des revendications 1 à 7 quand le programme est exécuté sur un dispositif.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02075153 A1
- WO 2008041066 A1
- DE 29715249 U1